# EUROPEAN PATENT APPLICATION

(11) **EP 4 804 070 A1**
(43) Date of publication of application: **09.09.2026**
(21) Application number: 24902751.7
(22) Date of filing: 09.12.2024
(51) Int. Cl.: G06F 30/10

(54) **MAGNETRON FORMING METHOD, MAGNETRON, AND MAGNETRON SPUTTERING DEVICE**

(30) Priority: 14.12.2023 CN 202311723084
(71) Applicant: Beijing NAURA Microelectronics Equipment Co., Ltd., Beijing 100176 (CN)
(72) Inventor: DING, Jihua, Beijing 100176 (CN); YANG, Yujie, Beijing 100176 (CN)
(74) Representative: Cohausz & Florack
(86) International application number: PCT/CN2024/137728
(87) International publication number: WO 2025/124330

(57) **Abstract**

The present disclosure provides a method for forming a magnetron, a magnetron, and a magnetron sputtering device. The forming method includes: obtaining, according to magnetic pole arrangement of the magnetron, horizontal magnetic field intensities of respective points on a magnetic arc line of the magnetron at any radius on a surface of a target material; obtaining, according to the horizontal magnetic field intensities of the respective points on the magnetic arc line at any radius on the surface of the target material and a relationship between the horizontal magnetic field intensities and corrosion probabilities of the target material, a corrosion probability at any radius on the surface of the target material; and determining, according to corrosion probabilities at a plurality of radii on the surface of the target material, the magnetic pole arrangement of the magnetron, such that it is unnecessary to perform magnetron sputtering experiments by using the target material to obtain corrosion data on the surface of the target material, thereby reducing design costs of the magnetron and shortening a design cycle of the magnetron.

## Description

### TECHNICAL FIELD

The present disclosure relates to the technical field of semiconductor processing, and specifically relates to a method for forming a magnetron, a magnetron, and a magnetron sputtering device.

### BACKGROUND

Magnetron sputtering is a type of Physical Vapor Deposition (PVD), in which electrons are caused to collide with a process gas (such as argon gas), to generate plasma including positive ions and new electrons, and by causing the positive ions in the plasma to collide with a target material, material in the target material is sputtered out and deposited as a thin film.

In order to improve the sputtering rate, a magnetron is usually arranged on a back surface of a target material of a magnetron sputtering device, and a movement trajectory of electrons is extended through a magnetic field generated by the magnetron, so as to increase a collision probability between the electrons and the process gas, and improve plasma density. However, because plasma density at a position where a magnetic field on a surface of the target material is concentrated is higher than plasma density at other positions of the target material, and a corrosion probability at a position with higher plasma density is greater than a corrosion probability at other positions, the corrosion probability at the position where the magnetic field on the surface of the target material is concentrated is greater than the corrosion probability at other positions of the target material, resulting in lower material utilization rates at the other positions of the target material.

Although utilization rates of the target material may be improved by designing a magnetron having a specific magnetic pole distribution pattern, during a process of designing the magnetron, corrosion data of a corresponding target material needs to be obtained according to magnetron sputtering experimental data, so as to determine whether the design of the magnetron satisfies requirements. However, because costs of the target material, especially precious metal target materials, are high, and time consumed by the magnetron sputtering experiment is also relatively long, design costs of the magnetron are high, and a design cycle is relatively long.

### SUMMARY

The present disclosure provides a method for forming a magnetron, a magnetron, and a magnetron sputtering device, so as to reduce design costs and a design cycle of the magnetron.

In a first aspect, the present disclosure provides a method for forming a magnetron, including: obtaining, according to magnetic pole arrangement of the magnetron, horizontal magnetic field intensities of points on a magnetic arc line of the magnetron at any radius on a surface of a target material; obtaining, according to the horizontal magnetic field intensities of the points on the magnetic arc line at any radius on the surface of the target material and a relationship between the horizontal magnetic field intensities and corrosion probabilities of the target material, a corrosion probability at any radius on the surface of the target material; and determining, according to corrosion probabilities at a plurality of radii on the surface of the target material, the magnetic pole arrangement of the magnetron.

In some embodiments, the obtaining, according to the horizontal magnetic field intensities of the points on the magnetic arc line at any radius on the surface of the target material and the relationship between the horizontal magnetic field intensities and the corrosion probabilities of the target material, the corrosion probability at any radius on the surface of the target material includes: obtaining, according to radial components of the horizontal magnetic field intensities of the points on the magnetic arc line at any radius on the surface of the target material and a relationship between horizontal magnetic field intensities and the corrosion probabilities of the target material under a stationary state of the magnetron, a radial corrosion probability at any radius on the surface of the target material; obtaining, according to tangential components of the horizontal magnetic field intensities of the points on the magnetic arc line at any radius on the surface of the target material and a relationship between horizontal magnetic field intensities and the corrosion probabilities of the target material under a rotating state of the magnetron, a tangential corrosion probability at any radius on the surface of the target material; and obtaining, according to the radial corrosion probability and the tangential corrosion probability at any radius on the surface of the target material, the corrosion probability at any radius on the surface of the target material, where the corrosion probability at any radius on the surface of the target material is equal to a sum of the radial corrosion probability and the tangential corrosion probability at the radius.

In some embodiments, the obtaining, according to radial components of the horizontal magnetic field intensities of the points on the magnetic arc line at any radius on the surface of the target material and the relationship between horizontal magnetic field intensities and the corrosion probabilities of the target material under the stationary state of the magnetron, the radial corrosion probability at any radius on the surface of the target material includes:

The radial corrosion probability at any radius on the surface of the target material is obtained according to radial components of the horizontal magnetic field intensities of the points on the magnetic arc line at any radius on the surface of the target material and a functional relationship expression *E_{radial}* (*r*) = ∑*B_{xyr}*(*L_{Arc}*(*r*)) /*Max*(∑*B_{xyr}*(*L_{Arc}*(*r*))); where r represents any radius on the surface of the target material, *B_{xyr}*(*L_{Arc}*(*r*)) represents a radial component of a horizontal magnetic field intensity of any point on the magnetic arc line at any radius on the surface of the target material, *B_{xyr}*(*L_{Arc}*(*r*)) represents a sum of radial components of the horizontal magnetic field intensities of the points on the magnetic arc line at any radius on the surface of the target material, *Max*(∑*B_{xyr}*(*L_{Arc}*(*r*)) represents a maximum value of sums of radial components of the horizontal magnetic field intensities of the points on the magnetic arc lines at respective radii on the surface of the target material, and *E_{radial}* (*r*) represents the radial corrosion probability at any radius on the surface of the target material.

In some embodiments, the obtaining, according to tangential components of the horizontal magnetic field intensities of the points on the magnetic arc line at any radius on the surface of the target material and the relationship between horizontal magnetic field intensities and the corrosion probabilities of the target material under the rotating state of the magnetron, the tangential corrosion probability at any radius on the surface of the target material includes:

The tangential corrosion probability at any radius on the surface of the target material is obtained according to tangential components of the horizontal magnetic field intensities of the points on the magnetic arc line at any radius on the surface of the target material and a functional relationship expression ${E}_{vertical} \left(r\right) = \frac{\sum {B}_{xyv} \left({L}_{Arc}\left(r\right)\right)}{r \times Max \left(\sum {B}_{xyv} \left({L}_{Arc}\left(r\right)\right)\right)}$;

Where r represents any radius on the surface of the target material, *B_{xyv}*(*L_{Arc}*(*r*)) represents a tangential component of a horizontal magnetic field intensity of any point on the magnetic arc line at any radius on the surface of the target material, ∑*B_{xyv}*(*L_{Arc}*(*r*)) represents a sum of tangential components of the horizontal magnetic field intensities of the points on the magnetic arc line at any radius on the surface of the target material, *Max*(∑*B_{xyv}*(*L_{Arc}*(*r*))) represents a maximum value of sums of tangential components of the horizontal magnetic field intensities of the points on the magnetic arc lines at respective radii on the surface of the target material, and *E_{vertical}*(*r*) represents the tangential corrosion probability at any radius on the surface of the target material.

In some embodiments, the determining, according to the corrosion probabilities at the plurality of radii on the surface of the target material, the magnetic pole arrangement of the magnetron includes: obtaining, according to the corrosion probabilities at the plurality of radii on the surface of the target material, a utilization rate of the target material; and if the utilization rate of the target material is less than a target utilization rate, adjusting the magnetic pole arrangement of the magnetron.

In some embodiments, the obtaining, according to the corrosion probabilities at the plurality of radii on the surface of the target material, the utilization rate of the target material includes: obtaining, according to the corrosion probabilities at the plurality of radii on the surface of the target material, a corrosion probability curve or a corrosion area proportion of the surface of the target material; and obtaining, according to the corrosion probability curve or the corrosion area proportion of the surface of the target material, the utilization rate of the target material.

In some embodiments, the method further includes: if the utilization rate of the target material is greater than or equal to the target utilization rate, obtaining uniformity of a thin film formed by a magnetron sputtering device having the magnetron; and if the uniformity of the thin film is less than a target uniformity, finely adjusting the magnetic pole arrangement of the magnetron.

In some embodiments, the adjusting the magnetic pole arrangement of the magnetron includes: adjusting, according to a maximum corrosion probability or a minimum corrosion probability among the corrosion probabilities at the plurality of radii on the surface of the target material, the magnetic pole arrangement at a corresponding radius; and/or adjusting at least one of a number of magnetic poles of the magnetron, a number of arrangement pattern spirals, and spiral curvature variation.

In a second aspect, the present disclosure provides a magnetron, where the magnetron is formed by using the forming method according to any one of the above.

In a third aspect, the present disclosure provides a magnetron sputtering device, including the magnetron according to any one of the above.

In the method for forming a magnetron, the magnetron, and the magnetron sputtering device disclosed in the present disclosure, according to magnetic pole arrangement of the magnetron, horizontal magnetic field intensities of points on a magnetic arc line of the magnetron at any radius on the surface of the target material are obtained, according to the horizontal magnetic field intensities of the points on the magnetic arc line at any radius on the surface of the target material and the relationship between the horizontal magnetic field intensities and corrosion probabilities of the target material, corrosion probabilities at any radius on the surface of the target material are obtained, and according to the corrosion probabilities at the plurality of radii on the surface of the target material, the magnetic pole arrangement of the magnetron is determined, such that magnetron sputtering experiments do not need to be performed by using the target material to obtain corrosion data of the surface of the target material, thereby reducing design costs of the magnetron and shortening a design cycle of the magnetron.

### BRIEF DESCRIPTION OF THE DRAWINGS

In order to more clearly describe the technical solutions in the embodiments of the present disclosure or the background art, the accompanying drawings required for use in the embodiments of the present disclosure or the background art will be described below.
FIG. 1 is a schematic structural diagram of a magnetron sputtering device disclosed in embodiments of the present disclosure.
FIG. 2 is a flowchart of a method for forming a magnetron disclosed in embodiments of the present disclosure.
FIG. 3 is a schematic diagram of distribution of horizontal magnetic field intensities at respective points on a surface of a target material of a magnetron disclosed in embodiments of the present disclosure.
FIG. 4 is a schematic diagram of distribution of horizontal magnetic field intensities at respective points on respective magnetic arc lines on a surface of a target material of a magnetron disclosed in some other embodiments of the present disclosure.
FIG. 5 is a schematic diagram of distribution of respective magnetic arc lines on a surface of a target material disclosed in embodiments of the present disclosure.
FIG. 6 is a schematic diagram of a magnetron disclosed in some other embodiments of the present disclosure.
FIG. 7 is a schematic diagram of distribution of radial components of horizontal magnetic field intensities at respective points on magnetic arc lines at a plurality of radii on a surface of a target material disclosed in embodiments of the present disclosure.
FIG. 8 is a schematic diagram of distribution of tangential components of horizontal magnetic field intensities at respective points on magnetic arc lines at a plurality of radii on a surface of a target material disclosed in embodiments of the present disclosure.
FIG. 9 is a schematic diagram of a curve of radial corrosion probability varying with radius disclosed in embodiments of the present disclosure.
FIG. 10 is a schematic diagram of a curve of tangential corrosion probability varying with radius disclosed in embodiments of the present disclosure.
FIG. 11 is a schematic diagram of a curve of corrosion probability varying with radius and an actual curve of corrosion probability varying with radius disclosed in embodiments of the present disclosure.
FIG. 12 is a schematic diagram of relationships among horizontal magnetic field intensities and radial components and tangential components at respective points on respective magnetic arc lines on a surface of a target material disclosed in embodiments of the present disclosure.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are merely a part of the embodiments of the present disclosure, rather than all embodiments. All other embodiments obtained by persons skilled in the art based on the embodiments in the present disclosure without making creative efforts fall within the scope of protection of the present disclosure.

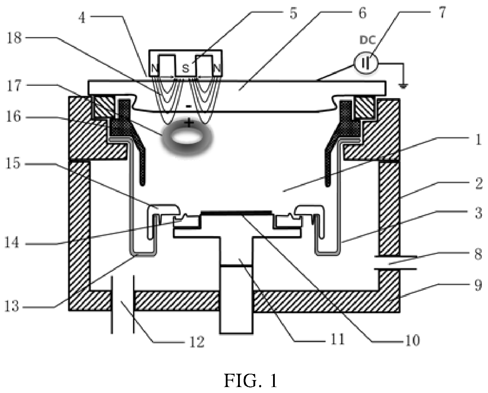

As shown in FIG. 1, a magnetron sputtering device includes a sputtering chamber 1, and the sputtering chamber 1 includes: a chamber body 2, a process assembly 3, and a cathode sputtering system 4. The chamber body 2 includes a process gas interface 8, a chamber wall 9, a base 11, and a vacuum system 12. The process gas interface 8 is configured to introduce a process gas (such as argon gas) into the chamber, the base 11 is configured to carry a processed workpiece such as a wafer 10, and the vacuum system 12 is configured to evacuate the chamber to a vacuum state. The process assembly 3 includes a lower liner 13, a deposition ring 14, a cover ring 15, and an upper liner 16. The process assembly 3 may be arranged around the interior of the chamber body 2, so as to shield respective side walls of the chamber body 2 and ensure that the side walls of the chamber body 2 are not contaminated. The cathode sputtering system 4 includes a magnetron 5, a target material 6, and a direct-current power supply 7.

Before a magnetron sputtering process is performed, a processed workpiece such as the wafer 10 is placed on the base 11, and then the chamber is evacuated to a vacuum state by the vacuum system 12. After the chamber reaches a specified vacuum degree, a certain amount of argon gas is introduced into the chamber through the process gas interface 8 as a process gas, and a negative bias voltage is applied to the target material 6 through the direct-current power supply 7, such that the argon gas in the chamber is ionized. Under a confinement effect of the magnetic field generated by the magnetron 5 on electrons, stable plasma 17 is formed in a dense region of the surface magnetic field 18 of the target material 6. Under the action of an electric field, argon ions in the plasma 17 continuously bombard the surface of the target material 6, such that atoms of the target material 6 are sputtered out and deposited on surfaces of processed workpieces such as the wafer 10 to form a coating film.

At present, rotation of the magnetron 5 is usually controlled during operation of the magnetron sputtering device, so as to improve corrosion uniformity of the surface of the target material and utilization rates of the target material by improving distribution uniformity of the magnetic field generated by the magnetron 5. However, corrosion uniformity and utilization rates of the target material 6 still need to be further improved. Although corrosion uniformity and utilization rates of the target material may also be improved by designing a magnetron having a specific magnetic pole distribution pattern, during a process of designing the magnetron, corrosion data of a corresponding target material needs to be obtained according to magnetron sputtering experiments to determine whether the design of the magnetron satisfies requirements, resulting in relatively high design costs and a relatively long design cycle of the magnetron.

Research has found that electrons are mainly confined within a magnetron race track near the surface of the target material by the horizontal magnetic field of the magnetron, resulting in plasma concentration in a region corresponding to the magnetron race track on the surface of the target material being much higher than plasma concentration in other regions on the surface of the target material, resulting in corrosion probability in the region corresponding to the magnetron race track on the surface of the target material being much higher than corrosion probability in other regions on the surface of the target material. Therefore, it may be determined that plasma distribution is similar to horizontal magnetic field distribution, and a relationship between horizontal magnetic field intensities and corrosion probabilities is obtained according to a relationship between plasma density and corrosion probabilities, such that corrosion probabilities on the surface of the target material are obtained according to the relationship between the horizontal magnetic field intensities and the corrosion probabilities.

Based on this, the present disclosure provides a method for forming a magnetron. By obtaining horizontal magnetic field intensities of points on a magnetic arc line of the magnetron at any radius on the surface of the target material through the magnetron, and according to the horizontal magnetic field intensities of the points on the magnetic arc line at any radius on the surface of the target material and the relationship between the horizontal magnetic field intensities and corrosion probabilities of the target material, corrosion probabilities at any radius on the surface of the target material are obtained, such that it is unnecessary to perform magnetron sputtering experiments by using the target material to obtain corrosion data on the surface of the target material, thereby reducing design costs of the magnetron and shortening a design cycle of the magnetron.

It should be noted that the horizontal magnetic field intensities of points on the magnetic arc line of the magnetron at any radius on the surface of the target material may be obtained by performing simulation on the magnetron, or may also be obtained in other manners, which is not limited in the present disclosure. In addition, the relationship between the horizontal magnetic field intensities and the corrosion probabilities of the target material may be a functional relationship or may also be another relationship, which is likewise not limited in the present disclosure.

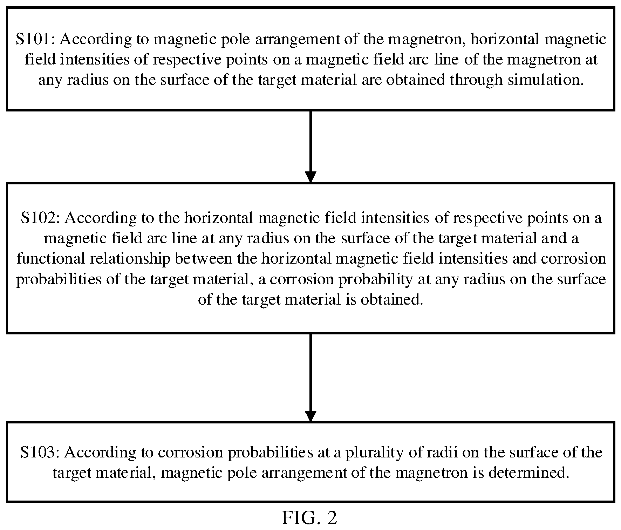

The method for forming a magnetron disclosed in the embodiments of the present disclosure will be described in detail below by taking a manner of performing simulation on the magnetron as an example. As shown in FIG. 2, the forming method includes:
S101: According to magnetic pole arrangement of the magnetron, horizontal magnetic field intensities of respective points on a magnetic arc line of the magnetron at any radius on the surface of the target material are obtained through simulation.

In the embodiments of the present disclosure, by establishing a simulation model of the magnetron, horizontal magnetic field intensities of respective points on magnetic arc lines at a plurality of radii on the surface of the target material of the magnetron are obtained through simulation, so as to obtain corrosion probabilities at the plurality of radii on the surface of the target material according to a functional relationship between the horizontal magnetic field intensities and the corrosion probabilities of the target material.

In some embodiments of the present disclosure, a simulation model is established according to magnetic pole arrangement of an initially designed magnetron, and according to a direct-current magnetron sputtering principle and the simulation model, horizontal magnetic field intensities of respective points on a magnetic arc line of the magnetron at any radius on the surface of the target material are obtained through simulation.

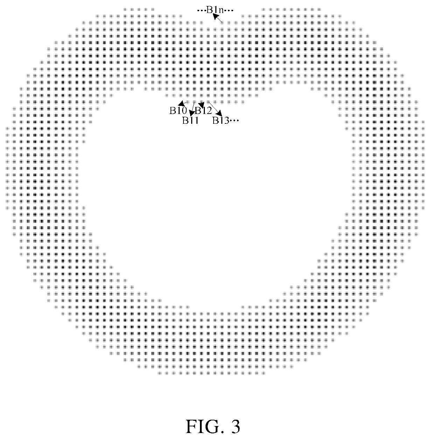

In some embodiments, according to the direct-current magnetron sputtering principle and the simulation model, horizontal magnetic field intensities B10~B1n of respective points on the surface of the target material of the magnetron as shown in FIG. 3 may be obtained through simulation, and then according to the horizontal magnetic field intensities B10~B1n of the respective points on the surface of the target material of the magnetron, horizontal magnetic field intensities B20~B2n of respective points on a magnetic arc line of the magnetron at any radius on the surface of the target material are obtained, that is, a horizontal magnetic field intensity matrix B20~B2n of the magnetic arc lines of the magnetron at respective radii on the surface of the target material is obtained.

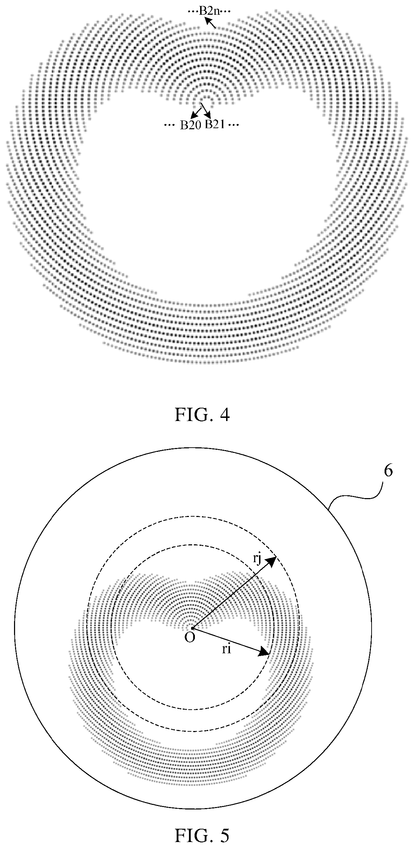

Certainly, the present disclosure is not limited thereto. In some other embodiments, according to the direct-current magnetron sputtering principle and the simulation model, horizontal magnetic field intensities B20~B2n of respective points on a magnetic arc line of the magnetron at any radius on the surface of the target material as shown in FIG. 4 may also be directly obtained through simulation, that is, a horizontal magnetic field intensity matrix B20~B2n of the magnetic arc lines of the magnetron at respective radii on the surface of the target material is obtained. Where n is an integer greater than 2.

As shown in FIG. 5, the plurality of radii on the surface of the target material 6 are a plurality of circular ring positions on the surface of the target material 6 having different distances from a center O of the target material. The magnetic arc line at any radius is an overlapping line between a circular ring at the radius and a horizontal magnetic field intensity distribution diagram. Respective points on the magnetic arc line are obtained by equally dividing the magnetic arc line according to arc intervals or equally dividing the magnetic arc line according to angular intervals.

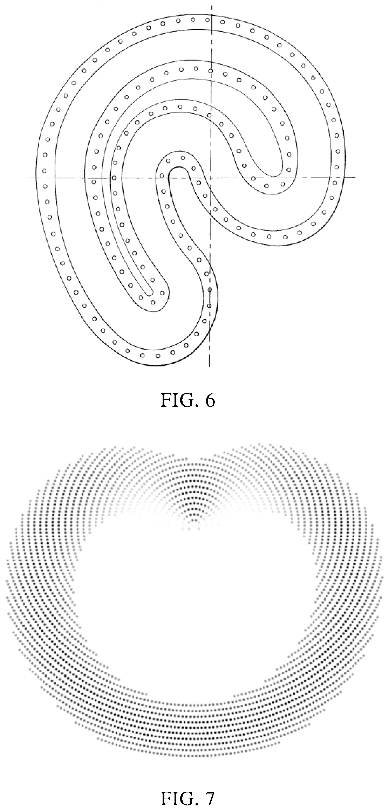

It should be noted that, in the embodiments shown in FIG. 3 to FIG. 5, description is merely provided by taking a circular target material and a heart-shaped horizontal magnetic field intensity distribution diagram of the magnetron on the surface of the target material as examples. Certainly, the present disclosure is not limited thereto. In some other embodiments, the horizontal magnetic field intensity distribution diagram may also be a magnetic field distribution diagram of a spiral magnetron as shown in FIG. 6. Where the magnetic field intensity distribution diagram is determined by a magnetic pole distribution diagram, and the magnetic field intensity distribution diagram may be the same as the magnetic pole distribution diagram.

S102: According to horizontal magnetic field intensities of respective points on a magnetic arc line at any radius on the surface of the target material and a functional relationship between the horizontal magnetic field intensities and corrosion probabilities of the target material, a corrosion probability at any radius on the surface of the target material is obtained.

It may be understood that, because plasma density distribution is mainly determined by horizontal magnetic field intensity distribution, a plasma density distribution diagram is similar to a horizontal magnetic field intensity distribution diagram. According to horizontal magnetic field intensities of respective points on magnetic arc lines at respective radii on the horizontal magnetic field intensity distribution diagram and a functional relationship between the horizontal magnetic field intensities and corrosion probabilities of the target material, corrosion probabilities at respective radii on the surface of the target material may be obtained.

In some embodiments of the present disclosure, if the magnetron always remains in a stationary state during operation of the magnetron sputtering device, corrosion probabilities on the surface of the target material may be obtained according to a corresponding relationship between horizontal magnetic field intensities and corrosion probabilities of the target material under the stationary state of the magnetron; and if the magnetron always remains in a rotating state during operation of the magnetron sputtering device, corrosion probabilities on the surface of the target material may be obtained according to a corresponding relationship between horizontal magnetic field intensities and corrosion probabilities of the target material under the rotating state of the magnetron.

However, the inventors have found through research that, although the magnetron always remains in a rotating state during operation of the magnetron sputtering device, radial components of the horizontal magnetic field are unrelated to angular velocity, and tangential components of the horizontal magnetic field are positively correlated with angular velocity. If corrosion probabilities on the surface of the target material are obtained only according to the corresponding relationship between the horizontal magnetic field intensities and the corrosion probabilities of the target material under the rotating state of the magnetron, accuracy of the corrosion probabilities will be relatively low.

Based on this, in order to improve accuracy of the corrosion probabilities, the functional relationship between the horizontal magnetic field intensities and the corrosion probabilities of the target material under the stationary state of the magnetron may be regarded as a functional relationship between radial components of the horizontal magnetic field intensities and the corrosion probabilities of the target material, and radial corrosion probabilities on the surface of the target material are obtained accordingly. The corresponding relationship between the horizontal magnetic field intensities and the corrosion probabilities of the target material under the rotating state of the magnetron may be regarded as a corresponding relationship between tangential components of the horizontal magnetic field intensities and the corrosion probabilities of the target material, and tangential corrosion probabilities on the surface of the target material are obtained accordingly. Then, corrosion probabilities on the surface of the target material are obtained according to the radial corrosion probabilities and the tangential corrosion probabilities on the surface of the target material.

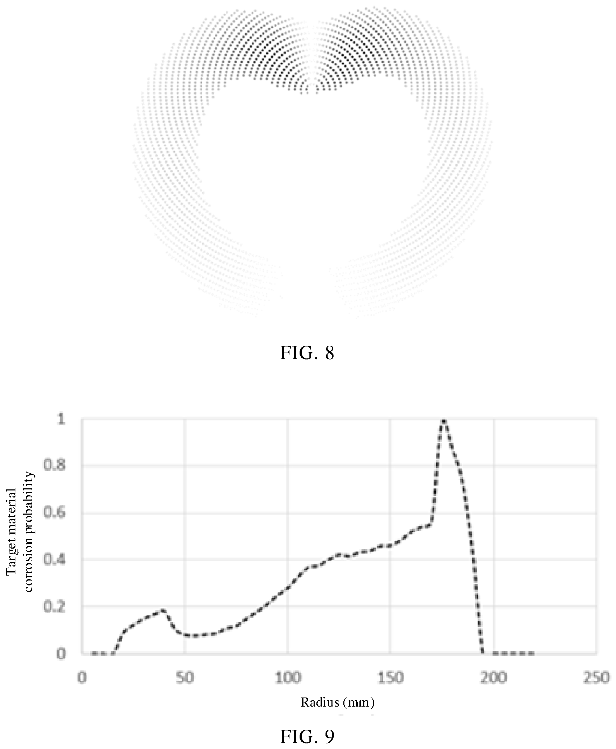

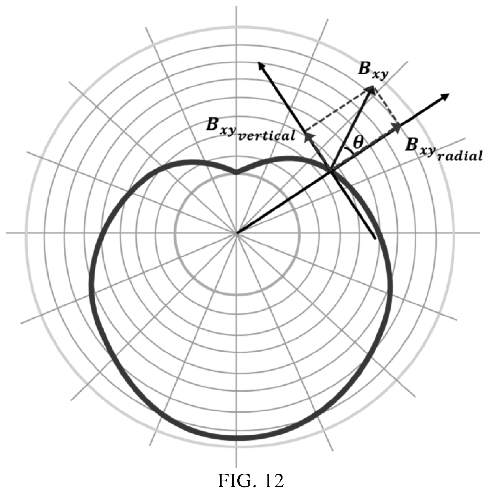

It should be noted that the horizontal magnetic field may be divided into a radial magnetic field and a tangential magnetic field according to a rotation direction of the magnetron. Where, as shown in FIG. 12, a radial component of the horizontal magnetic field intensity is equal to a product of the horizontal magnetic field intensity and cosθ, and a tangential component of the horizontal magnetic field intensity is equal to a product of the horizontal magnetic field intensity and sinθ, where θ represents an included angle between a horizontal magnetic field direction and a radial direction. Where the radial components of the horizontal magnetic field intensities of respective points on a magnetic arc line of the magnetron at any radius on the surface of the target material are as shown in FIG. 7, and the tangential components of the horizontal magnetic field intensities of respective points on a magnetic arc line of the magnetron at any radius on the surface of the target material are as shown in FIG. 8.

Based on this, in some embodiments of the present disclosure, according to radial components of the horizontal magnetic field intensities of respective points on a magnetic arc line at any radius on the surface of the target material and a functional relationship between horizontal magnetic field intensities and corrosion probabilities of the target material under the stationary state of the magnetron, radial corrosion probabilities at any radius on the surface of the target material are obtained; according to tangential components of the horizontal magnetic field intensities of respective points on a magnetic arc line at any radius on the surface of the target material and a functional relationship between horizontal magnetic field intensities and corrosion probabilities of the target material under the rotating state of the magnetron, tangential corrosion probabilities at any radius on the surface of the target material are obtained; and according to the radial corrosion probabilities and the tangential corrosion probabilities at any radius on the surface of the target material, corrosion probabilities at any radius on the surface of the target material are obtained, where the corrosion probabilities at any radius on the surface of the target material are equal to sums of the radial corrosion probabilities and the tangential corrosion probabilities at the radii.

In some embodiments of the present disclosure, radial corrosion probabilities at any radius on the surface of the target material may be obtained according to radial components of the horizontal magnetic field intensities of respective points on a magnetic arc line at any radius on the surface of the target material and a functional relationship expression *E_{radial}* (*r*) *=* Σ*B_{xyr}*(*L_{Arc}*(*r*)) /*Max*(∑ *B_{xyr}*(*L_{Arc}*(*r*))).

Where r represents any radius on the surface of the target material, *B_{xyr}*(*L_{Arc}*(*r*)) represents a radial component of a horizontal magnetic field intensity of any point on a magnetic arc line at any radius on the surface of the target material, Σ*B_{xyr}*(*L_{Arc}*(*r*)) represents a sum of radial components of the horizontal magnetic field intensities of respective points on the magnetic arc line at any radius on the surface of the target material, *Max*(Σ*B_{xyr}*(*L_{Arc}*(*r*))) represents a maximum value of sums of radial components of the horizontal magnetic field intensities of respective points on magnetic arc lines at respective radii on the surface of the target material, and *E_{radial}* (*r*) represents a radial corrosion probability at any radius on the surface of the target material.

In some embodiments of the present disclosure, tangential corrosion probabilities at any radius on the surface of the target material may be obtained according to tangential components of the horizontal magnetic field intensities of respective points on a magnetic arc line at any radius on the surface of the target material and a functional relationship expression ${E}_{vertical} \left(r\right) = \frac{\sum {B}_{xyv} \left({L}_{Arc}\left(r\right)\right)}{r \times Max \left(\sum {B}_{xyv} \left({L}_{Arc}\left(r\right)\right)\right)} .$

Where r represents any radius on the surface of the target material, *B_{xyv}*(*L_{Arc}*(*r*)) represents a tangential component of a horizontal magnetic field intensity of any point on a magnetic arc line at any radius on the surface of the target material, Σ*B_{xyv}*(*L_{Arc}*(*r*)) represents a sum of tangential components of the horizontal magnetic field intensities of respective points on the magnetic arc line at any radius on the surface of the target material, *Max*(∑*B_{xyv}*(*L_{Arc}*(*r*))) represents a maximum value of sums of tangential components of the horizontal magnetic field intensities of respective points on magnetic arc lines at respective radii on the surface of the target material, and *E_{vertical}*(*r*) represents a tangential corrosion probability at any radius on the surface of the target material.

It should be noted that, assuming respective radii are r1, r2...rm, where m is an integer greater than 2, *Max*(∑*B_{xyr}*(*L_{Arc}*(*r*))) is a maximum value among Σ*B_{xyr}*(*L_{Arc}*(*r*1)), Σ*B_{xyr}*(*L_{Arc}*(*r*2)), Σ*B_{xyr}*(*L_{Arc}*(*rm*)), and *Max*(Σ*B_{xyv}*(*L_{Arc}*(*r*))) is a maximum value among Σ*B_{xyv}*(*L_{Arc}*(*r*1)), Σ*B_{xyv}*(*L_{Arc}*(*r*2)), Σ*B_{xyv}*(*L_{Arc}*(*rm*)).

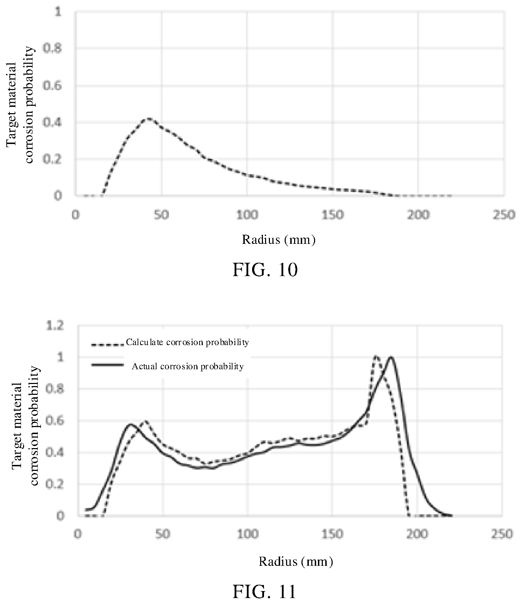

On this basis, according to sums of radial corrosion probabilities and tangential corrosion probabilities at any radius on the surface of the target material, corrosion probabilities at any radius on the surface of the target material may be obtained. In some embodiments, according to radial corrosion probabilities at a plurality of radii on the surface of the target material, a radial corrosion probability curve of the surface of the target material may be obtained, where the radial corrosion probability curve is a curve of radial corrosion probabilities on the surface of the target material varying with radius, and the radial corrosion probability curve is as shown in FIG. 9. According to tangential corrosion probabilities at a plurality of radii on the surface of the target material, a tangential corrosion probability curve of the surface of the target material may be obtained, where the tangential corrosion probability curve is a curve of tangential corrosion probabilities on the surface of the target material varying with radius, and the tangential corrosion probability curve is as shown in FIG. 10. Where a corrosion probability at a radius where the target material is corroded most severely is 1, and a corrosion probability at a radius where the target material is corroded lightly is less than 1.

As shown in FIG. 11, a curve of corrosion probabilities on the surface of the target material varying with radius calculated by the method disclosed in the embodiments of the present disclosure is substantially similar to an actual curve of corrosion probabilities on the surface of the target material varying with radius, thereby verifying correctness of the corrosion probability calculation method disclosed in the embodiments of the present disclosure. After the corrosion probabilities of the target material corresponding to the initially designed magnetron are obtained, the design of the magnetron may be optimized according to the corrosion probabilities of the target material, so as to obtain a magnetron having high utilization rates of the target material. That is, the forming method disclosed in the embodiments of the present disclosure can not only reduce design costs of the magnetron and shorten a design cycle of the magnetron, but also improve utilization rates of the target material, and has good engineering application prospects.

It should be noted that, in the embodiments of the present disclosure, the estimation process of the corrosion probabilities is described merely by taking a circular target material as an example. However, the present disclosure is not limited thereto. In some other embodiments, the target material may also be a target material having other shapes such as a square target material or a rhombic target material, which will not be described in detail herein again.

S103: According to corrosion probabilities at a plurality of radii on the surface of the target material, magnetic pole arrangement of the magnetron is determined.

According to the functional relationship expression between the horizontal magnetic field intensities and the corrosion probabilities of the target material, it may be known that the corrosion probabilities of the target material are mainly related to lengths of magnetic arc lines (or numbers of points on the magnetic arc lines) and intensities of the horizontal magnetic field. An initially designed magnetic field distribution shape of the magnetron may be a multi-spiral shape as shown in FIG. 6, and the shape may contain more magnetic field distribution paths. Therefore, an area of a corrosion region may be increased, thereby obtaining a magnetron having high utilization rates. However, the designed magnetic field distribution paths also cannot be excessively long. If a path at a certain radius is excessively long, the radius will be corroded completely first, while corrosion at other radii is relatively slight, resulting in low utilization rates of the target material. Based on this, after corrosion probabilities at the plurality of radii on the surface of the target material are obtained, magnetic pole arrangement of the magnetron further needs to be determined according to utilization rates of the target material.

In some embodiments of the present disclosure, utilization rates of the target material may be obtained according to corrosion probabilities at a plurality of radii on the surface of the target material. Where, if a corrosion probability at one radius is 1, the utilization rates of the target material are equal to or close to 100%. According to an average value of utilization rates of the target material at the plurality of radii, utilization rates of the entire target material may be obtained. If the utilization rates of the target material are less than target utilization rates, it indicates that the magnetic pole arrangement of the magnetron does not satisfy design requirements, and the magnetic pole arrangement of the magnetron needs to be adjusted. If the utilization rates of the target material are greater than or equal to the target utilization rates, it indicates that the magnetic pole arrangement of the magnetron satisfies the design requirements, and the magnetic pole arrangement of the magnetron may not be adjusted, or the magnetic pole arrangement of the magnetron may be finely adjusted. Based on this, the method disclosed in the embodiments of the present disclosure can not only reduce design costs of the magnetron and shorten a design cycle of the magnetron, but also ensure corrosion uniformity of the target material by adjusting the magnetic pole arrangement of the magnetron.

In some embodiments, a corrosion probability curve or a corrosion area proportion of the surface of the target material may be obtained according to corrosion probabilities at a plurality of radii on the surface of the target material, and utilization rates of the target material may be obtained according to the corrosion probability curve or the corrosion area proportion of the surface of the target material.

On this basis, in some embodiments of the present disclosure, the method for forming a magnetron further includes: if the utilization rates of the target material are greater than or equal to target utilization rates, obtaining uniformity of a thin film formed by a magnetron sputtering device having the magnetron. If the uniformity of the thin film is greater than or equal to target uniformity, the magnetic pole arrangement of the magnetron is not adjusted, and the magnetic pole arrangement of the magnetron is determined as a final arrangement result. If the uniformity of the thin film is less than the target uniformity, the magnetic pole arrangement of the magnetron is finely adjusted (for example, magnetic pole arrangement of a local region of the magnetron is adjusted). If, after magnetic pole arrangement and process conditions (such as air pressure, power, and target-substrate spacing) are finely adjusted multiple times, the uniformity of the thin film is still less than the target uniformity, the magnetic pole arrangement of the magnetron is redesigned. Based on this, the method disclosed in the embodiments of the present disclosure can not only reduce design costs of the magnetron and shorten a design cycle of the magnetron, but also ensure corrosion uniformity of the target material and uniformity of deposited thin films by adjusting the magnetic pole arrangement of the magnetron. In some embodiments, adjusting the magnetic pole arrangement of the magnetron includes: adjusting magnetic pole arrangement at corresponding radii according to maximum corrosion probabilities (corrosion probabilities at curve peaks in FIG. 11) or minimum corrosion probabilities (corrosion probabilities at curve troughs in FIG. 11) among corrosion probabilities at the plurality of radii on the surface of the target material. Specifically, magnetic pole arrangement at radii corresponding to the maximum corrosion probabilities may be adjusted, or magnetic pole arrangement at radii corresponding to the minimum corrosion probabilities may be adjusted. And/or, at least one of a number of magnetic poles of the magnetron, a number of arrangement pattern spirals, and spiral curvature variation is adjusted. Certainly, the present disclosure is not limited thereto. In practical applications, an adjustment solution for the magnetic pole arrangement may be determined according to specific situations, which will not be described in detail herein again.

As another embodiment of the disclosed content of the present disclosure, the embodiments of the present disclosure further disclose a magnetron sputtering device. As shown in FIG. 1, the magnetron sputtering device includes a magnetron 5 and the like, where the magnetron 5 may be formed by using the forming method disclosed in any one of the foregoing embodiments.

Various technical features of the foregoing embodiments may be combined arbitrarily. For simplicity of description, not all possible combinations of various technical features in the foregoing embodiments are described. However, as long as combinations of these technical features are not contradictory, such combinations shall be regarded as falling within the scope recorded in the present specification.

The foregoing embodiments merely express several implementation manners of the present specification, and the descriptions thereof are specific and detailed, but shall not therefore be understood as limiting the scope of the invention patent. It should be noted that, for persons of ordinary skill in the art, several modifications and improvements may further be made without departing from the concept of the present specification, and these all fall within the protection scope of the present specification. Therefore, the protection scope of the patent of the present specification shall be subject to the appended claims.

## Claims

1. A method for forming a magnetron, comprising:
obtaining, according to magnetic pole arrangement of the magnetron, horizontal magnetic field intensities of respective points on a magnetic arc line of the magnetron at any radius on a surface of a target material;
obtaining, according to the horizontal magnetic field intensities of the respective points on the magnetic arc line at any radius on the surface of the target material and a relationship between the horizontal magnetic field intensities and corrosion probabilities of the target material, a corrosion probability at any radius on the surface of the target material; and
determining, according to corrosion probabilities at a plurality of radii on the surface of the target material, the magnetic pole arrangement of the magnetron.

2. The forming method according to claim 1, wherein the obtaining, according to the horizontal magnetic field intensities of respective points on the magnetic arc line at any radius on the surface of the target material and the relationship between the horizontal magnetic field intensities and corrosion probabilities of the target material, the corrosion probability at any radius on the surface of the target material comprises:
obtaining, according to radial components of the horizontal magnetic field intensities of the respective points on the magnetic arc line at any radius on the surface of the target material and the relationship between horizontal magnetic field intensities and the corrosion probabilities of the target material under a stationary state of the magnetron, a radial corrosion probability at any radius on the surface of the target material;
obtaining, according to tangential components of the horizontal magnetic field intensities of the respective points on the magnetic arc line at any radius on the surface of the target material and the relationship between horizontal magnetic field intensities and the corrosion probabilities of the target material under a rotating state of the magnetron, a tangential corrosion probability at any radius on the surface of the target material; and
obtaining, according to the radial corrosion probability and the tangential corrosion probability at any radius on the surface of the target material, the corrosion probability at any radius on the surface of the target material, wherein the corrosion probability at any radius on the surface of the target material is equal to a sum of the radial corrosion probability and the tangential corrosion probability at the radius.

3. The forming method according to claim 2, wherein the obtaining, according to the radial components of the horizontal magnetic field intensities of the respective points on the magnetic arc line at any radius on the surface of the target material and the relationship between horizontal magnetic field intensities and the corrosion probabilities of the target material under the stationary state of the magnetron, the radial corrosion probability at any radius on the surface of the target material comprises:
obtaining, according to the radial components of the horizontal magnetic field intensities of the respective points on the magnetic arc line at any radius on the surface of the target material and a functional relationship expression *E_{radial}* (*r*) = ∑*B_{xyr}*(*L_{Arc}*(*r*)) / *Max*(∑*B_{xyr}*(*L_{Arc}*(*r*))), the radial corrosion probability at any radius on the surface of the target material;
wherein r represents any radius on the surface of the target material, *B_{xyr}*(*L_{Arc}*(*r*)) represents a radial component of a horizontal magnetic field intensity of any point on the magnetic arc line at any radius on the surface of the target material, Σ*B_{xyr}*(*L_{Arc}*(*r*)) represents a sum of radial components of the horizontal magnetic field intensities of the respective points on the magnetic arc line at any radius on the surface of the target material, *Max*(Σ*B_{xyr}*(*L_{Arc}*(*r*))) represents a maximum value of sums of radial components of the horizontal magnetic field intensities of the respective points on magnetic arc lines at respective radii on the surface of the target material, and *E_{radial}* (*r*) represents the radial corrosion probability at any radius on the surface of the target material.

4. The forming method according to claim 2, wherein the obtaining, according to the tangential components of the horizontal magnetic field intensities of the respective points on the magnetic arc line at any radius on the surface of the target material and the relationship between horizontal magnetic field intensities and the corrosion probabilities of the target material under the rotating state of the magnetron, the tangential corrosion probability at any radius on the surface of the target material comprises:
obtaining, according to the tangential components of the horizontal magnetic field intensities of the respective points on the magnetic arc line at any radius on the surface of the target material and a functional relationship expression ${E}_{vertical} \left(r\right) = \frac{\sum {B}_{xyv} \left({L}_{Arc}\left(r\right)\right)}{r \times Max \left(\sum {B}_{xyv} \left({L}_{Arc}\left(r\right)\right)\right)}$ , the tangential corrosion probability at any radius on the surface of the target material;
wherein r represents any radius on the surface of the target material, *B_{xyv}*(*L_{Arc}*(*r*))represents a tangential component of a horizontal magnetic field intensity of any point on the magnetic arc line at any radius on the surface of the target material, Σ*B_{xyv}*(*L_{Arc}*(*r*)) represents a sum of tangential components of the horizontal magnetic field intensities of the respective points on the magnetic arc line at any radius on the surface of the target material, *Max*(Σ*B_{xyv}*(*L_{Arc}*(*r*))) represents a maximum value of sums of tangential components of the horizontal magnetic field intensities of the respective points on magnetic arc lines at respective radii on the surface of the target material, and *E_{vertical}*(*r*) represents the tangential corrosion probability at any radius on the surface of the target material.

5. The forming method according to claim 1, wherein the determining, according to the corrosion probabilities at the plurality of radii on the surface of the target material, the magnetic pole arrangement of the magnetron comprises:
obtaining, according to the corrosion probabilities at the plurality of radii on the surface of the target material, utilization rates of the target material; and
if the utilization rate of the target material is less than a target utilization rate, adjusting the magnetic pole arrangement of the magnetron.

6. The forming method according to claim 5, wherein the obtaining, according to the corrosion probabilities at the plurality of radii on the surface of the target material, the utilization rates of the target material comprises:
obtaining, according to the corrosion probabilities at the plurality of radii on the surface of the target material, a corrosion probability curve or a corrosion area proportion of the surface of the target material; and
obtaining, according to the corrosion probability curve or the corrosion area proportion of the surface of the target material, the utilization rates of the target material.

7. The forming method according to claim 5, wherein the forming method further comprises:
if the utilization rates of the target material are greater than or equal to the target utilization rates, obtaining uniformity of a thin film formed by a magnetron sputtering device having the magnetron; and
if the uniformity of the thin film is less than target uniformity, finely adjusting the magnetic pole arrangement of the magnetron.

8. The forming method according to claim 5, wherein the adjusting the magnetic pole arrangement of the magnetron comprises:
adjusting, according to a maximum corrosion probability or a minimum corrosion probability among the corrosion probabilities at the plurality of radii on the surface of the target material, the magnetic pole arrangement at a corresponding radius; and/or adjusting at least one of a number of magnetic poles of the magnetron, a number of arrangement pattern spirals, and spiral curvature variation.

9. A magnetron, wherein the magnetron is formed by using the forming method according to any one of claims 1 to 8.

10. A magnetron sputtering device, comprising the magnetron according to claim 9.
